# EUROPÄISCHE PATENTANMELDUNG

(11) **EP 1 093 303 A2**
(43) Veröffentlichungstag der Anmeldung: **18.04.2001**
(21) Anmeldenummer: 00118560.2
(22) Anmeldetag: 26.08.2000
(51) Int. Cl.: H04N 5/445

(54) **Einrichtung zur Bedienung eines Multimediagerätes**

(30) Priorität: 14.10.1999 DE 19949676
(71) Anmelder: Deutsche Telekom AG, 53113 Bonn (DE)
(72) Erfinder: Miethe, Klaus, Dr., 64285 Darmstadt (DE); Oberndorfer, Wolfgang, 64291 Darmstadt (DE); Verclas, Stephan, Dr., 68723 Plankstadt (DE); Xia, Weiqun, Dr., 64291 Darmstadt (DE)

(57) **Zusammenfassung**

Bei einer Einrichtung zur Bedienung eines Multimediagerätes mit einem Bildschirm, insbesondere eines Fernsehgerätes, wobei auf dem Bildschirm in verschiedenen Ebenen zueinander zugeordnete Auswahlmenüs darstellbar sind, aus denen jeweils ein Menüpunkt mit Hilfe einer Bedieneinrichtung auswählbar ist, weisen die Auswahlmenüs die Form von Bändern auf, deren Länge im wesentlichen den ganzen Bildschirm einnimmt und deren Breite jeweils ein Bruchteil des Bildschirms beträgt. Bänder, die Auswahlmenüs in höheren Ebenen darstellen, verlaufen in einer Richtung und Bänder, die Auswahlmenüs niedrigerer Ebenen darstellen, verlaufen senkrecht dazu.

## Beschreibung

Die Erfindung betrifft eine Einrichtung zur Bedienung eines Multimediagerätes mit einem Bildschirm, insbesondere eines Fernsehgerätes, wobei auf dem Bildschirm in verschiedenen Ebenen zueinander zugeordnete Auswahlmenüs darstellbar sind, aus denen jeweils ein Menüpunkt mit Hilfe einer Bedieneinrichtung auswählbar ist.

In zunehmendem Maße werden Personalcomputer als sogenannte Multimediacomputer eingesetzt, bei denen verschiedene Technologien und Dienste in einem Gerät genutzt werden können. Darunter seien genannt Telefonie, Bildtelefonie, Datenübertragung, insbesondere im Zusammenhang mit dem Internet, elektronische Post, Spiele, Wiedergabe von gespeicherten Videosequenzen, beispielsweise aus auf CD-ROM gespeicherten Datenbanken, sowie Fernsehen und Rundfunk. Außerdem sind mit Hilfe eines derartigen Personalcomputers diverse Haussteuerungsfunktionen möglich, wie beispielsweise Raumüberwachung, Licht- und Heizungssteuerung, Alarmanlage, Haustürüberwachung.

Unter anderem wegen der Vielfalt dieser und anderer Funktionen ist die Bedienung eines Personalcomputers einerseits recht schwierig. Mit zunehmender Integration verschiedener Dienste wird es andererseits möglich, ein Fernsehgerät zu einem Informationszentrum auszubauen. Damit erlangt das Fernsehgerät und gegebenenfalls damit verbundene Zusatzgeräte - im folgenden insgesamt als Multimediageräte bezeichnet - zunehmende Komplexität, so daß auch hierbei die Bedienung für nicht speziell ausgebildete Personen schwierig wird.

Aufgabe der vorliegenden Erfindung ist es daher, die Bedienung eines Multimediagerätes soweit zu erleichtern, daß eine Nutzung der mit dem Multimediagerät möglichen Dienste auch ungeübten Personen ermöglicht wird. Diese Aufgabe wird erfindungsgemäß dadurch gelöst, daß die Auswahlmenüs die Form von Bändern aufweisen, deren Länge im wesentlichen den ganzen Bildschirm einnimmt und deren Breite jeweils ein Bruchteil des Bildschirms beträgt und daß Bänder, die Auswahlmenüs in höheren Ebenen darstellen, in einer Richtung und Bänder, die Auswahlmenüs niederigerer Ebenen darstellen, senkrecht dazu verlaufen.

Trotz der Vielfalt der Einzelfunktionalitäten des Multimediagerätes erfolgen die Bedienvorgänge fast ausschließlich menügeführt über eine einfach gestaltete Fernbedienung, wie sie der Nutzer vom Fernsehen her gewohnt ist. Es sind keine Computerkenntnisse erforderlich, ebenso wird keine vom Personalcomputer bekannte Maus verwendet. Die meisten der zur Zeit verwendeten Fernbedienungen verfügen bereits über Pfeiltasten zur Bewegung einer Marke nach oben und unten bzw. links und rechts. Außerdem können in vorteilhafter Weise als Eingabe eine bereits ebenfalls bei üblichen Fernbedienungen vorhandene OK-Taste und eine weitere Taste im Sinne einer Escape-Taste (rückwärtiges Verlassen eines Menüs ohne Funktion) verwendet werden.

Die Erfindung ermöglicht, daß sich der Nutzer stets bewußt ist, in welchem Auswahlmenü bzw. in welcher Ebene der hierarchisch strukturierten Auswahlmenüs er sich gerade befindet. Vorzugsweise ist bei der Erfindung vorgesehen, daß Bänder, die Auswahlmenüs in höheren Ebenen darstellen, vertikal verlaufen. Um dem Nutzer eine weitere Sicherheit bei der Bedienung des Multimediagerätes zu geben, ist bei einer vorteilhaften Ausgestaltung der Erfindung vorgesehen, daß in den vertikal verlaufenden Bändern Menüpunkte zur Auswahl zwischen verschiedenen Diensten und Grundfunktionen und in den horizontal verlaufenden Bändern Menüpunkte zur Auswahl innerhalb der Dienste bzw. Grundfunktionen dargestellt sind.

Vorzugsweise ist die erfindungsgemäße Einrichtung derart gestaltet, daß die Bänder in der Nähe einer jeweils dazu parallel verlaufenden Kante des Bildschirms, vorzugsweise der linken bzw. der unteren Kante, angeordnet sind.

Damit verbleibt auf dem Bildschirm ausreichender Platz für eine andere vorteilhafte Ausgestaltung, die darin besteht, daß auf der verbleibenden Fläche ein verkleinertes Bild dargestellt ist, dessen Inhalt je nach Betriebszustand wechselt.

Vorzugsweise ist bei dieser Ausgestaltung vorgesehen, daß bei Betriebszuständen, die kein bestimmtes Bild erfordern, ein jeweils empfangenes Fernsehbild dargestellt wird.

Zur Wahrung der Übersichtlichkeit der gesamten Bildschirmdarstellung kann die erfindungsgemäße Einrichtung derart gestaltet sein, daß jeweils ein Auswahlmenü auf dem Bildschirm dargestellt ist.

Zur weiteren Orientierung kann dabei vorgesehen sein, daß bei Aufruf eines weiteren Auswahlmenüs einer der höheren Ebenen das Auswahlmenü schuppenartig über bereits zuvor aufgerufene Auswahlmenüs gelegt wird. Dadurch wird dem Nutzer angezeigt, in welcher Ebene dieser Auswahlmenüs er sich befindet. Ansonsten sind allein durch die einzelnen Menüpunkte die Auswahlmenüs selbst erklärend, so daß bei Darstellung auch nur eines Menüs der Nutzer ohne Schwierigkeiten erkennt, in welchem Menü er sich befindet. Im übrigen kann dieses zusätzlich durch entsprechende Schrifteinblendung auf dem Bildschirm angezeigt werden.

Die senkrecht verlaufenden Menüs können beispielsweise zur Auswahl zwischen Fernsehempfang (TV), Video und Audio, Video-on-Demand, Recorder bzw. Player, Internetbenutzung und Telefonieren dienen. Diese Menüs werden im folgenden auch Navigationsmenüs genannt. Als Beispiel für ein horizontales Menü ist beispielsweise die Bedienung eines Videorecorders mit Wiedergabe, Aufnahme, schnellem Vorlauf, schnellem Rücklauf und ähnlichem möglich. Derartige Menüs werden im folgenden auch Anwendungsmenüs genannt.

Verschiedene Einstellungen sind im wesentlichen unabhängig von dem jeweils aufgerufenen Anwendungsmenü, so daß bei der erfindungsgemäßen Einrichtung vorzugsweise vorgesehen ist, daß ein Auswahlmenü zur Auswahl von Ton- und Bildeinstellungen vertikal angeordnet ist und daß unter der Darstellung des empfangenen Bildes eine Abbildung des jeweils ausgewählten Stellgliedes erscheint.

Durch die erfindungsgemäße Wahl der Menüstruktur ist es möglich, daß die Darstellung der einzelnen Menüpunkte mit Worten bzw. Symbolen so groß erfolgen kann, daß bei dem beim Fernsehen üblichen Betrachtungsabstand von 5 mal der Bilddiagonale ein Erkennen der Worte bzw. Symbole möglich ist. Um dennoch ein besonders leichtes Erkennen des jeweils angewählten Menüpunktes zu ermöglichen, ist gemäß einer anderen Weiterbildung vorgesehen, daß der jeweils ausgewählte Menüpunkt durch Vergrößern des den Menüpunkt darstellenden Wortes und/oder Symbols innerhalb eines Kreises erfolgt.

Bei dieser Ausführungsform kann der für den Kreis mit der vergrößerten Darstellung erforderliche Platz trotz genügend großer Schrift dadurch geschaffen werden, daß die Menüpunkte in Abhängigkeit von der Position des Kreises derart beweglich angeordnet sind, daß die dem jeweils angewählten Menüpunkt benachbarten Menüpunkte von diesem abrücken und die anderen Menüpunkte zusammenrücken.

Eine andere Weiterbildung besteht darin, daß ferner ein Menü zur Eingabe von Nutzern und diesen zugeordneten Paßwörtern vorgesehen ist und daß für die einzelnen Nutzer Zulassungsumfänge speicherbar sind, welche Programme und/oder Dienste von dem jeweiligen Nutzer nach Eingabe des Paßwortes eingestellt werden können. Dabei ist vorzugsweise vorgesehen, daß eine Änderung der Benutzungsumfänge nur von einem berechtigten Nutzer nach entsprechender Paßworteingabe vorgenommen werden kann. Mit dieser Weiterbildung können beispielsweise Eltern Kinder vom Empfang bestimmter Fernsehprogramme ausschließen oder kostenträchtige Dienste für Dritte sperren.

Ausführungsbeispiele der Erfindung sind in der Zeichnung anhand mehrerer Figuren dargestellt und in der nachfolgenden Beschreibung näher erläutert. Es zeigt:
- Fig. 1: ein Schirmbild mit einem verkleinerten Fernsehbild und einem Navigationsmenü in der höchsten Ebene (Hauptmenü),
- Fig. 2: ein Schirmbild mit einem weiteren Navigationsmenü,
- Fig. 3: ein Schirmbild mit einem weiter verkleinerten Fernsehbild und einer Liste von empfangbaren Fernsehsendern,
- Fig. 4: ein Schirmbild bei der Einstellung des Kontrasts mit Hilfe der erfindungsgemäßen Einrichtung,
- Fig. 5: ein Schirmbild während der Nutzung des Internets mit einem dafür ausgelegten Anwendungsmenü,
- Fig. 6: ein Anwendungsmenü zur Bearbeitung von elektronischer Post,
- Fig. 7: ein Anwendungsmenü zum Telefonieren,
- Fig. 8: ein Anwendungsmenü für ein Video-Wiedergabegerät und
- Fig. 9: ein Blockschaltbild eines Multimediagerätes.

Gleiche Teile sind in den Figuren mit gleichen Bezugszeichen versehen.

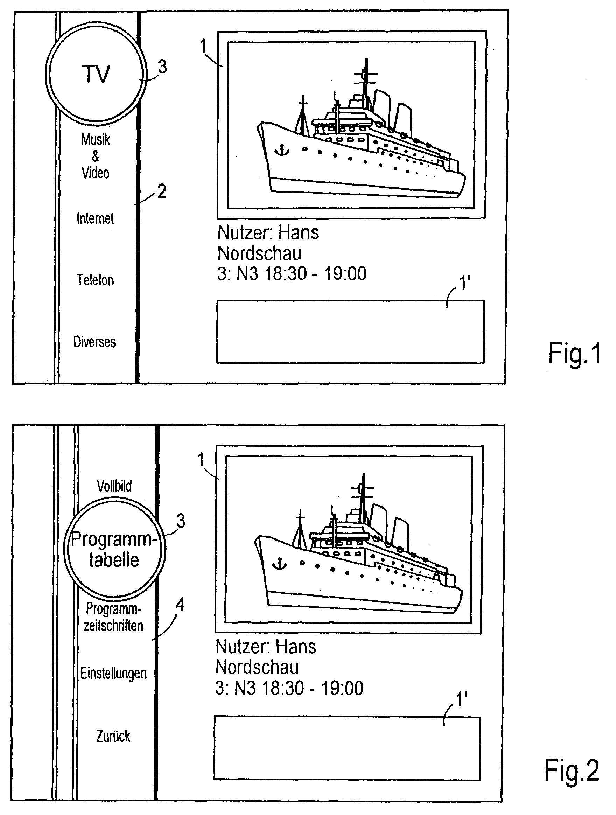

Fig. 1 zeigt ein Schirmbild mit einem verkleinerten empfangenen Fernsehbild 1 und einem Navigationsmenü 2, das die Menüpunkte TV (Fernsehen), Musik & Video, Internet, Telefon und Diverses umfaßt. Unter dem verkleinerten Fernsehbild 1 befindet sich eine Erläuterung des zur Zeit empfangenen Programms, die mit noch einzuführenden Datenübertragungssystemen in Verbindung mit den Fernsehsignalen übertragen wird. Bei dem in Fig. 1 dargestellten Beispiel ist der Name der Sendung, deren Anfangszeit und deren Endzeit, die Kanalnummer des eingestellten Senders, die Kurzbezeichnung des eingestellten Senders sowie der jeweilige Nutzer der in einer vorangegangenen Paßwortabfrage eingetragen wurde, aufgeführt. Ein Rechteck 1' deutet eine Fläche an, die beispielsweise für Werbung genutzt werden kann.

Der jeweils durch Pfeiltasten angewählte Menüpunkt wird vergrößert in Form einer Lupe 3 dargestellt. Wählt der Nutzer diesen Menüpunkt durch Betätigen der Taste OK aus, erhält er das in Fig. 2 dargestellte Navigationsmenü 4. Will er das laufende Programm sehen, braucht er lediglich die OK-Taste zu betätigen, während die Lupe 3 auf dem Menüpunkt Vollbild steht. Das Bild wird dann wie üblich auf den gesamten Bildschirm vergößert.

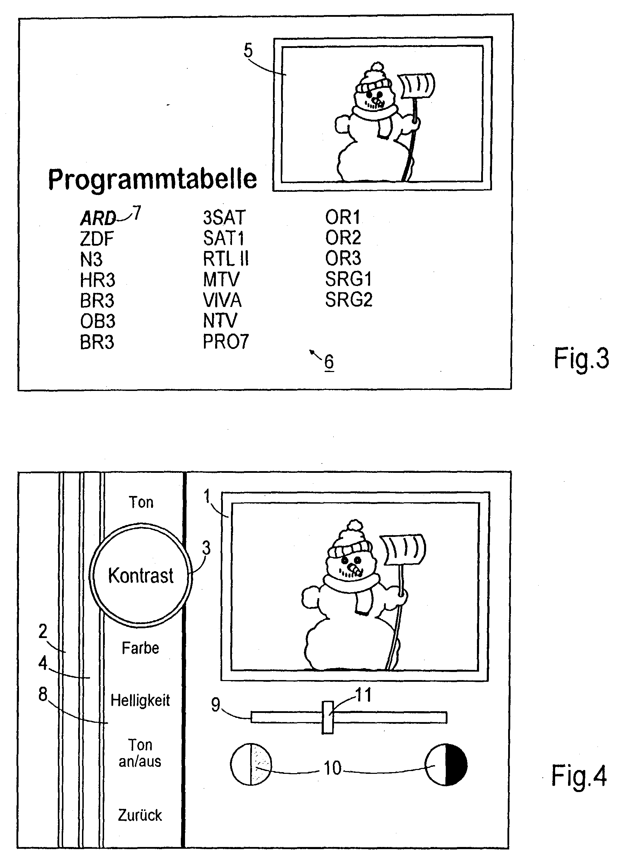

In dem Menü 4 sind unter anderem zwei weitere Menüpunkte vorhanden, nämlich "Programmtabelle" und "Programmzeitschriften". Diese dienen dem Nutzer dazu, ein geeignetes Programm herauszufinden und einzustellen. Die Informationen dazu werden über den elektronischen Programmführer EPG, dessen Einführung noch bevorsteht, übertragen. Wählt der Nutzer die Programmtabelle aus, so erhält er das in Fig. 3 dargestellte Schirmbild, bei dem neben dem noch etwas stärker verkleinertem Fernsehbild 5 eine Tabelle aller empfangbaren Sender dargestellt ist. Der jeweils empfangene Sender ist dabei in geeigneter Weise, beispielsweise durch eine entsprechende Farbe, hervorgehoben, was in Fig. 3 lediglich durch Fett- und Kursivschrift angedeutet ist. Zur Einstellung eines anderen Senders benötigt der Nutzer lediglich die Pfeiltasten und die OK-Taste. Bereits bei der Betätigung der Pfeiltasten ändert sich das Bild entsprechend des jweils angewählten Senders, so daß der Nutzer leicht erkennen kann, welches Programm der jeweils angewählte Sender ausstrahlt. Durch anschließendes Betätigen der OK-Taste wird das verkleinerte Bild 5 auf die volle Bilschirmgröße gebracht.

Bewegt der Nutzer die Lupe 3 bei dem Menü 4 (Fig. 2) auf den Menüpunkt Einstellungen und bedient anschließend die OK-Taste, erhält er ein drittes Navigationsmenü 8 (Fig. 4), das die Ton- und Bildeinstellungen des Fernsehgerätes ermöglicht. Ein zur jeweiligen Einstellung dienendes Stellglied 9 wird unterhalb des verkleinerten Bildes 1 dargestellt, gegebenenfalls mit entsprechender Symbolik 10. Der Nutzer kann dann durch Betätigen der Pfeiltasten den "Griff" 11 bis zur gewünschten Einstellung beispielsweise des Kontrasts - bewegen.

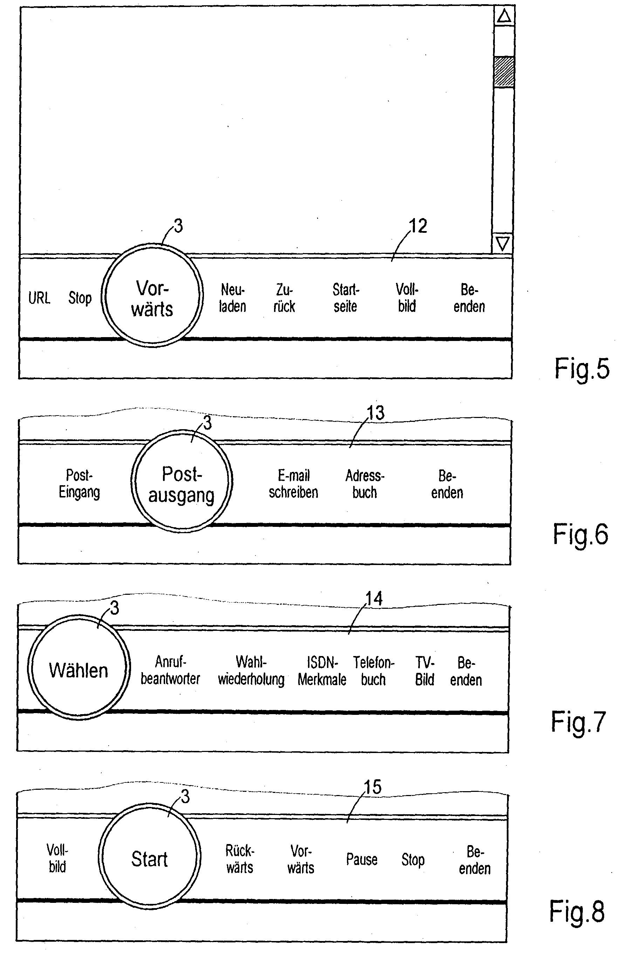

Das in Fig. 5 dargestellte zur Nutzung des Internets ausgelegte Schirmbild enthält ein Anwendungsmenü 12, das die wesentlichen von Internet-Browsern her bekannten Menüpunkte enthält. Durch die horizontale Anordnung des Anwendungsmenüs bleibt praktisch die volle Bildschirmbreite für die Darstellung der Internet-Seiten erhalten - abgesehen von einer üblichen Laufleiste, die bei der erfindungsgemäßen Einrichtung mit den Pfeiltasten bedient werden kann. Dadurch werden Schriftzeilen soweit wie möglich bei den gegebenen Auflösungsverhältnissen vollständig dargestellt, was das Lesen weitgehend erleichtert.

Fig. 6 zeigt ein Anwendungsmenü 13 zur Behandlung von elektronischer Post (E-Mail). Während mit dem in Fig. 7 dargestellten Anwendungsmenü 14 ein in das Multimediagerät integriertes Telefon bedient werden kann, zeigt Fig. 8 als Beispiel ein Anwendungsmenü 15 zur Bedienung eines Video-Wiedergabegerätes, beispielsweise eines DVD-Players.

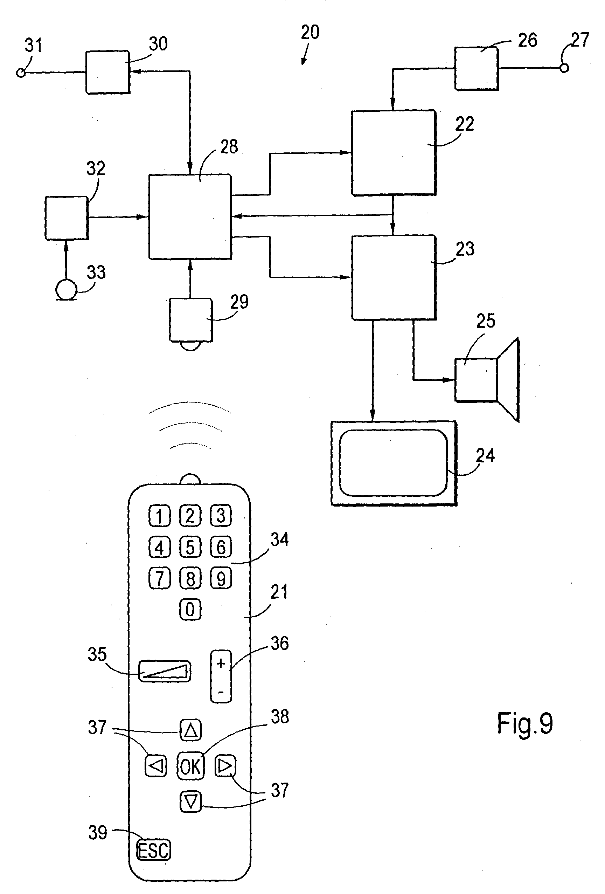

Fig. 9 zeigt ein Blockschaltbild eines Multimediagerätes 20 mit einer Fernbedienung 21, wobei lediglich die zum Verständnis der Erfindung erforderlichen Teile dargestellt sind. Das Multimediagerät 20 enthält ein Fernsehgerät mit einem Empfangsteil 22 und einem Videoteil 23, sowie einem Bildschirm (24) (Bildröhre oder Flüssigkristall- bzw. Plasma-Display) und Lautsprecher, von denen schematisch lediglich ein Lautsprecher 25 dargestellt ist.

Der Empfangsteil 22 des Fernsehgerätes ist mit Hilfe einer Anschlußeinheit 26 und eines Anschlusses 27 mit einem nicht dargestellten Kabelnetz verbunden. Je nach Ausstattung kann das Fernsehgerät herkömmliche analoge Signale oder auch digital übertragene Fernsehprogramme (DVB) empfangen. Zur Steuerung des gesamten Ablaufes, zur Bildverarbeitung und weiterer Funktionen dient ein Prozessor 28, der auch die von einem Fernbedienungsempfänger 29 erhaltenen Signale verarbeitet. Ferner bildet der Prozessor 28 ein Telefon nach, wozu er über eine Netzanschlußeinheit 30 und einen Anschluß 31 mit dem Telefonnetz verbunden ist. Über einen Verstärker 32 ist ein Mikrofon 33 an den Prozessor 28 angeschlossen. Zum Hören wird beim Telefonieren der Lautsprecher 25 des Fernsehgerätes mitbenutzt.

Der Prozessor 28 ist unter anderem in der Lage, den Empfangsteil zu steuern, insbesondere auf den jeweils gewünschten Kanal einzustellen, mit den empfangenen Programmen übertragene Datensignale zu verarbeiten und das Videoteil 23 zur Erzeugung der einzelnen Schirmbilder zu steuern, beispielsweise zur Erzeugung der in den Figuren 1 bis 8 dargestellten Schirmbilder.

Die Fernbedienung 21 weist neben anderen nicht dargestellten Tasten eine Zehnertastatur 34, eine Wippe 35 zur Einstellung der Lautstärke und eine Wippe 36 zum Durchschalten der Programme auf. Mit diesen Tasten kann unabhängig von dem jeweils eingestellten Menü das Fernsehgerät bedient werden. Zur Bedienung mit Hilfe der Menüs sind vier Pfeiltasten 37, eine OK-Taste 38 und eine Escape-Taste 39 vorgesehen. Gelangt der Nutzer mit Hilfe dieser Tasten zu einem Menü, bei welchem eine numerische Eingabe verlangt wird, beispielsweise zum Wählen einer Telefonnummer, kann dazu die Zehnertastatur 34 benutzt werden.

## Patentansprüche

1. Einrichtung zur Bedienung eines Multimediagerätes mit einem Bildschirm, insbesondere eines Fernsehgerätes, wobei auf dem Bildschirm in verschiedenen Ebenen zueinander zugeordnete Auswahlmenüs darstellbar sind, aus denen jeweils ein Menüpunkt mit Hilfe einer Bedieneinrichtung auswählbar ist, dadurch gekennzeichnet, daß die Auswahlmenüs (2, 4, 8, 12 bis 15) die Form von Bändern aufweisen, deren Länge im wesentlichen den ganzen Bildschirm einnimmt und deren Breite jeweils ein Bruchteil des Bildschirms beträgt und daß Bänder, die Auswahlmenüs (2, 4, 8) in höheren Ebenen darstellen, in einer Richtung und Bänder, die Auswahlmenüs (12 bis 15) niedrigerer Ebenen darstellen, senkrecht dazu verlaufen.

2. Einrichtung nach Anspruch 1, dadurch gekennzeichnet, daß Bänder, die Auswahlmenüs (2, 4, 8) in höheren Ebenen darstellen, vertikal verlaufen.

3. Einrichtung nach einem der Ansprüche 1 oder 2, dadurch gekennzeichnet, daß in den vertikal verlaufenden Bändern (2, 4, 8) Menüpunkte zur Auswahl zwischen verschiedenen Diensten und Grundfunktionen und in den horizontal verlaufenden Bändern (12 bis 15) Menüpunkte zur Auswahl innerhalb der Dienste bzw. Grundfunktionen dargestellt sind.

4. Einrichtung nach einem der vorhergehenden Ansprüche, dadurch gekennzeichnet, daß die Bänder (2, 4, 8, 12 bis 15) in der Nähe einer jeweils dazu parallel verlaufenden Kante des Bildschirms (1), vorzugsweise der linken bzw. der unteren Kante, angeordnet sind.

5. Einrichtung nach Anspruch 4, dadurch gekennzeichnet, daß auf der verbleibenden Fläche ein verkleinertes Bild (1) dargestellt ist, dessen Inhalt je nach Betriebszustand wechselt.

6. Einrichtung nach Anspruch 5, dadurch gekennzeichnet, daß bei Betriebszuständen, die kein bestimmtes Bild erfordern, ein jeweils empfangenes Fernsehbild dargestellt wird.

7. Einrichtung nach einem der vorhergehenden Ansprüche, dadurch gekennzeichnet, daß jeweils ein Auswahlmenü (2, 4, 8, 12 bis 15) auf dem Bildschirm dargestellt ist.

8. Einrichtung nach einem der vorhergehenden Ansprüche, dadurch gekennzeichnet, daß bei Aufruf eines weiteren Auswahlmenüs (4, 8) einer der höheren Ebenen das Auswahlmenü schuppenartig über bereits zuvor aufgerufene Auswahlmenüs (2, 4) gelegt wird.

9. Einrichtung nach einem der vorhergehenden Ansprüche, dadurch gekennzeichnet, daß ein Auswahlmenü (8) zur Auswahl von Ton- und Bildeinstellungen vertikal angeordnet ist und daß unter der Darstellung des empfangenen Bildes eine Abbildung (9, 11) des jeweils ausgewählten Stellgliedes erscheint.

10. Einrichtung nach einem der vorhergehenden Ansprüche, dadurch gekennzeichnet, daß der jeweils ausgewählte Menüpunkt durch Vergrößern des den Menüpunkt darstellenden Wortes und/oder Symbols innerhalb eines Kreises (3) erfolgt.

11. Einrichtung nach Anspruch 10, dadurch gekennzeichnet, daß die Menüpunkte in Abhängigkeit von der Position des Kreises (3) derart beweglich angeordnet sind, daß die dem jeweils angewählten Menüpunkt benachbarten Menüpunkte von diesem abrücken und die anderen Menüpunkte zusammenrücken.

12. Einrichtung nach einem der vorhergehenden Ansprüche, dadurch gekennzeichnet, daß ferner ein Menü zur Eingabe von Nutzern und diesen zugeordneten Paßwörtern vorgesehen ist und daß für die einzelnen Nutzer Zulassungsumfänge speicherbar sind, welche Programme und/oder Dienste von dem jeweiligen Nutzer nach Eingabe des Paßwortes eingestellt werden können.

13. Einrichtung nach Anspruch 12, dadurch gekennzeichnet, daß eine Änderung der Benutzungsumfänge nur von einem berechtigten Nutzer nach entsprechender Paßworteingabe vorgenommen werden kann.
